# DEMANDE DE BREVET EUROPEEN

(11) **EP 3 501 895 A1**
(43) Date de publication de la demande: **26.06.2019**
(21) Numéro de dépôt: 18214376.8
(22) Date de dépôt: 20.12.2018
(51) Int. Cl.: B60Q 1/14, B60Q 1/08

(54) **ENSEMBLE D'ECLAIRAGE SEGMENTE POUR UN VEHICULE AUTOMOBILE**

(30) Priorité: 22.12.2017 FR 1763129
(71) Demandeur: Valeo Vision, 93012 Bobigny Cedex (FR)
(72) Inventeur: EL IDRISSI, Hafid, 93012 BOBIGNY CEDEX (FR); PELISSIER, Frantz, 93012 BOBIGNY Cedex (FR)
(74) Mandataire: Valeo Vision

(57) **Abrégé**

Essemble d'éclairage (100, 200, 300) pour un véhicule automobile comprenant plusieurs modules lumineux (110, 120, 210, 220, 310, 320), chaque module étant apte à émettre un faisceau lumineux segmenté et étant contrôlé par un processeur de commande commun (150, 250, 350) ayant une seule interface de sortie vidéo, tout en maintenant la possibilité de projeter des contours différents au niveau de chaque module lumineux (110, 120, 210, 220, 310, 320). Ceci réduit le nombre de connexions nécessaires entre une unité de commande et une pluralité de modules lumineux (110, 120, 210, 220, 310, 320), ce qui réduit la complexité du système, et en réduit le coût de production.

## Description

L'invention se rapporte à des ensembles d'éclairage pour véhicules automobiles, en particulier à de tels ensembles comprenant des sources lumineuses capables d'émettre des faisceaux lumineux segmentés, e.g., matriciels ou pixellisés.

Dans le domaine automobile, l'utilisation de dispositifs d'éclairage matriciels ou pixellisés est de plus en plus préconisée. Dans ce qui suit le terme « segmenté » sera appliqué à de tels dispositifs d'éclairage. De tels dispositifs sont aptes à projeter un faisceau lumineux ayant une empreinte et un contour prédéterminés par une image numérique fournie par un module de commande tel qu'un processeur d'images ou d'images vidéo. Il s'agit par exemple de dispositifs d'affichage à cristaux liquides dont chaque pixel émetteur d'un flux lumineux peut être commandé de manière indépendante. D'autres dispositifs d'éclairage segmentés comprennent des sources matricielles monolithiques à éléments semi-conducteurs émetteurs de lumière. Dans de tels sources, des éléments semi-conducteurs de type diode électroluminescente, LED, sont produites sur un substrat commun et agencées sous la forme d'une matrice. Chacune des LEDs de la matrice peut être commandée de manière indépendante. Une autre alternative est celle des dispositifs à matrice de micro-miroirs (« Digital Micromirror Device »), DMD. Dans un DMD, une source lumineuse illumine une matrice de micro-miroirs. La position de chaque micro-miroir est commandée de manière indépendante des autres micro-miroirs de la matrice par un dispositif mécanique de précision. La position relative d'un micro-miroir par rapport à la source lumineuse détermine si la lumière incidente sur le miroir est réfléchie vers la sortie du dispositif où le faisceau lumineux est formé, ou non. De cette manière un faisceau segmenté est réalisé. Encore une autre variante est donnée par les dispositifs à balayage Laser (« laser scanning »), tels qu'ils sont décrits à titre d'exemple dans le document brevet EP2690352.

Il est connu de commander des modules lumineux aptes à émettre des faisceaux lumineux segmentés à l'aide d'images numériques. Chaque pixel ou groupe de pixels de l'image numérique détermine l'état d'un pixel/segment du dispositif d'éclairage. En utilisant des solutions connues, il est nécessaire de prévoir un processeur capable de générer une image numérique de commande pour chaque module lumineux d'un véhicule automobile, si celui-ci est équipé de plusieurs modules lumineux à faisceaux segmentés. Ceci engendre d'une part un grand nombre de connexions entre les processeurs de commande et les modules lumineux, et d'autre part la mise en place d'un nombre important de processeurs de commande, qui sont relativement volumineux et onéreux compte tenu de l'espace restreint disponible dans un véhicule automobile. L'invention a pour objectif de pallier à au moins un des problèmes posés par l'art antérieur. Plus précisément, l'invention a pour objectif de proposer un ensemble d'éclairage lequel comprend plusieurs modules lumineux aptes à émettre un faisceau lumineux segmenté qui sont commandés par un seul processeur de commande, tout en maintenant la possibilité de projeter des contours différents au niveau de chaque module lumineux.

Selon un premier aspect de l'invention, un ensemble d'éclairage pour un véhicule automobile est proposé. L'ensemble comprend une pluralité de modules lumineux, chaque module lumineux étant apte à émettre un faisceau lumineux segmenté. L'ensemble d'éclairage est remarquable en ce qu'il comprend au moins une unité de commande commune à plusieurs modules lumineux, l'unité de commande étant adaptée à transmettre, moyennant un canal de communication, la même image numérique de commande comprenant une pluralité de canaux d'image numérique à chacun desdits modules. L'ensemble d'éclairage est en outre remarquable en ce que chaque module lumineux est adapté à projeter un faisceau lumineux segmenté déterminé par un sous-ensemble des canaux de l'image numérique de commande reçue.

De manière préférée, l'ensemble d'éclairage peut comprendre une unité de commande unique, commune à chacun des modules de la pluralité de modules lumineux. De préférence, l'unité de commande peut présenter une seule interface de sortie vidéo pour desservir les modules lumineux.

Chaque module lumineux peut de préférence être adapté à projeter un faisceau lumineux segmenté déterminé par un des canaux de l'image numérique de commande.

De préférence, au moins un des modules lumineux peut être adapté à projeter un faisceau lumineux segmenté déterminé par la combinaison d'au moins deux des canaux de l'image numérique de commande.

L'unité de commande peut de préférence comprendre une pluralité de sorties de données, chacune des sorties de données étant configurée pour l'envoi de l'image numérique de commande à un des modules lumineux.

Alternativement, de manière préférentielle, l'unité de commande peut comprendre une sortie de données, configurée pour l'envoi de l'image numérique de commande à un premier des modules lumineux, ledit premier module étant configuré à répéter l'image numérique de commande reçue à au moins un autre module lumineux de l'ensemble.

Les modules lumineux peuvent de préférence être reliés en chaîne ou en série, de manière à ce que chaque module du montage, mis à part le premier, est configuré pour recevoir l'image numérique de commande de la part de l'unité du module lumineux qui le précède dans la chaîne.

De préférence, les modules lumineux peuvent être capables de projeter un faisceau segmenté ayant une résolution d'au moins 800, préférentiellement d'au moins 1000 segments.

L'unité de commande peut, de manière préférée, être configurée à émettre une séquence d'images numériques de commande à destination des modules lumineux.

De préférence, les images numériques de commande transmises par l'unité de commande peuvent se suivre à une fréquence entre 30 Hz et 100 Hz, préférentiellement entre 50 Hz et 100 Hz et encore plus préférentiellement à une fréquence de 60 Hz.

L'image numérique de commande peut de préférence comprendre trois canaux d'image, notamment rouge, vert et bleu, et l'ensemble d'éclairage peut comprendre trois modules lumineux, dont chacun est configuré de manière à projeter un faisceau segmenté respectivement conforme à l'un desdits trois canaux.

De préférence, chaque module lumineux peut comprendre un dispositif de micro-miroirs, DMD, ou une source matricielle monolithique à éléments semi-conducteurs électroluminescents, ou un écran à cristaux liquides, ou un dispositif de projection à balayage Laser.

De préférence, les modules lumineux de l'ensemble d'éclairage peuvent être répartis sur des dispositifs lumineux extérieurs, tels que des projecteurs ou des feux, différents d'un véhicule automobile, par exemple droite et gauche et/ou avant et arrière.

Alternativement, une pluralité de modules lumineux de l'ensemble d'éclairage peut être incorporée dans un même dispositif lumineux d'un véhicule automobile.

Selon un autre aspect de l'invention, un procédé de commande de modules lumineux dans un ensemble d'éclairage pour un véhicule automobile est proposé. Chaque module lumineux est apte à émettre un faisceau lumineux segmenté. Le procédé est remarquable en ce qu'il comprend les étapes suivantes :
i) au niveau d'un module de commande, générer une image numérique de commande comprenant une pluralité de canaux d'image numérique, les informations contenues dans chaque canal d'image définissant les contours d'un faisceau lumineux segmenté à être émis par un des modules lumineux ;
ii) transmission, moyennant un canal de communication, de l'image numérique de commande à chacun desdits modules lumineux.

De préférence, le procédé peut en outre comprendre l'étape suivante :
iii) au niveau de chacun des modules lumineux, projeter un faisceau lumineux segmenté déterminé par un sous-ensemble des canaux de l'image numérique de commande reçue.

En utilisant les mesures proposées par les modes de réalisation de la présente invention, il devient possible de commander plusieurs modules lumineux aptes à émettre un faisceau lumineux pixellisé ou segmenté par un processeur de commande commun ayant une seule interface de sortie vidéo, tout en maintenant la possibilité de projeter des contours différents au niveau de chaque module lumineux. Ceci réduit le nombre de connexions nécessaires entre une unité de commande et une pluralité d'unités de projection, ce qui réduit la complexité du système, et en réduit le coût de production.

D'autres caractéristiques et avantages de la présente invention seront mieux compris à l'aide de la description des exemples et des dessins parmi lesquels :
- la figure 1 montre de manière schématisée un module lumineux selon un mode de réalisation préférentiel de l'invention ;
- la figure 2 montre de manière schématisée un module lumineux selon un mode de réalisation préférentiel de l'invention ;
- la figure 3 montre de manière schématisée un module lumineux selon un mode de réalisation préférentiel de l'invention.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre d'exemples et de manière non limitative. Des numéros de référence similaires seront utilisés pour décrire des concepts semblables à travers différents modes de réalisation de l'invention. Par exemple, les références 100, 200 et 300 désignent trois modes de réalisation d'un ensemble d'éclairage conforme à l'invention.

La description se concentre sur les aspects techniques qui distinguent les modes de réalisation d'un ensemble d'éclairage selon l'invention par rapport à des solutions connues. D'autres éléments techniques nécessaires au fonctionnement d'un ensemble d'éclairage, mais qui sont bien connus par l'homme du métier, ne sont pas expliqués en détails par soucis de présenter l'invention de manière claire et concise. Il s'agit par exemples de modules d'alimentation électrique pour alimenter les modules lumineux, et les unités de commande en courant électrique, ou de modules optiques comprennent des lentilles optiques, ou encore des éléments de dissipation thermique et des supports mécaniques. De même, le fonctionnement des modules lumineux à faisceau lumineux segmentés tels que le DMD, sources LED matricielles, sources à balayage Laser ou affichages à cristaux liquides ne sera pas détaillé et est connu dans l'art.

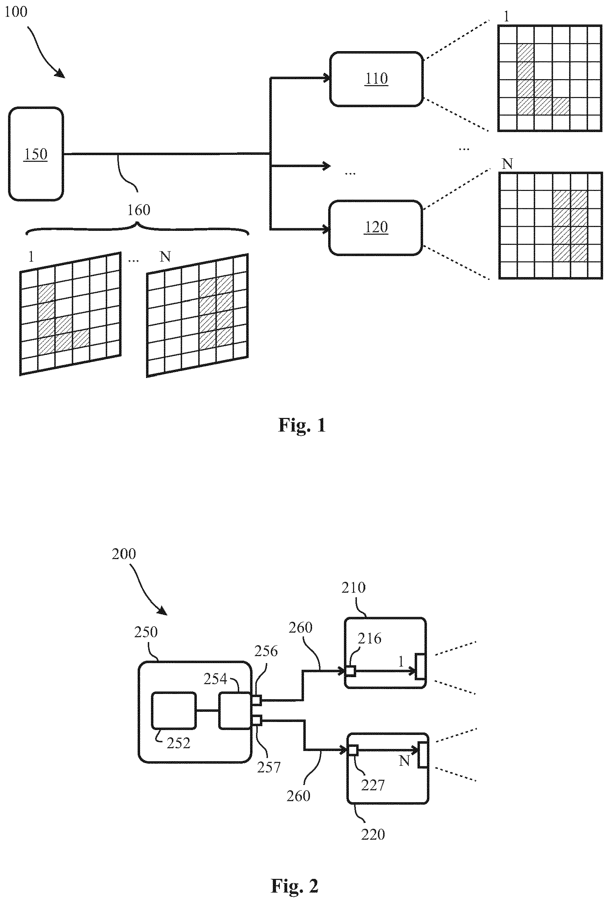

L'illustration de la figure 1 montre un schéma d'un ensemble d'éclairage 100. Une unité de commande 150, comprenant à titre d'exemple un processeur graphique capable de générer une image numérique de commande 160, est reliée de manière fonctionnelle moyennant un canal de communication c'est-à-dire de transmission de données, tel qu'un bus de données vidéo, à une pluralité de modules lumineux, dont deux modules 110 et 120 sont illustrés. Les modules lumineux font partie d'un projecteur d'un véhicule automobile. Dans un mode de réalisation alternatif, les deux modules lumineux font partie chacun d'un autre projecteur d'un véhicule automobile, par exemple du projecteur droit et respectivement gauche avant. L'image numérique comprend plusieurs canaux d'image. Il s'agit par exemple de canaux rouge, vert et bleu (canaux RGB).

De manière générale il est connu d'enregistrer différentes composantes d'une image numérique dans des canaux d'image dédiés, dont la composition donne l'image complète. A titre d'exemple, la composante rouge de chaque pixel est enregistrée dans une matrice qui représente le canal rouge, et ainsi de suite. La combinaison des canaux donne les composantes rouge, verte et bleue de chaque pixel de l'image numérique.

Dans le contexte de la présente invention, l'image numérique de commande 160 générée par l'unité de commande 150 comprend une pluralité de canaux, chaque canal représentant une matrice de pixels ou de segments. Le contenu de chaque matrice de segments est par exemple préenregistré dans un élément de mémoire auquel l'unité de commande a un accès en lecture. Par exemple, l'élément de mémoire peut contenir une pluralité de contenus possibles, selon la fonction lumineuse qui est à réaliser par les modules lumineux. Lorsque l'unité de commande reçoit une consigne de réalisation d'une fonction lumineuse donnée, par exemple depuis une unité de commande centrale du véhicule automobile, le contenu correspondant est chargé depuis l'élément de mémoire pour générer les canaux de l'image de commande 160. Les informations du premier canal 1 comprennent les informations de commande pour le premier module lumineux 110, tandis que les informations du canal N comprennent les informations de commande pour le module lumineux d'indice N, 120. En d'autres termes, l'image numérique 160 de dimensions X fois Y pixels ou segments comprend N sous-images de dimensions identiques et déterminées par chacun de ses canaux. Chaque module lumineux 110, 120 est configuré de manière à projeter un faisceau lumineux segmenté de dimensions X fois Y pixels, correspondant à un des canaux d'image reçus, en ignorant les autres canaux de l'image numérique de commande. Chaque module lumineux peut être situé dans un autre dispositif lumineux de projection (phare) du véhicule automobile.

A titre d'exemple, si le module lumineux 110 est un dispositif de type DMD, suite à la réception de l'image numérique de commande, les micro-miroirs sont positionnés par le module lumineux 110, qui comprend de manière connue son propre module de commande de la position des micro-miroirs. Le positionnement des micro-miroirs est réalisé de manière à ce que le contour déterminé par le premier canal d'image de l'image numérique de commande 160 soit projeté par le faisceau lumineux réfléchi par la matrice de micro-miroirs.

L'illustration de la figure 2 montre un autre mode de réalisation de l'ensemble d'éclairage 200 selon l'invention. Une unité de commande 250 comprend un processeur graphique 252 capable de générer une image numérique de commande 260 et une unité de transmission de données 254. Il s'agit par exemple d'une interface de communication de données configurée pour envoyer les données matricielles ou segmentées contenues dans les canaux de l'image numérique de commande 260 de manière séquentielle sur le canal de transmission de données qui relie l'unité de commande 250 aux modules lumineux 210, 220. L'unité de transmission de données 254 comprend deux sorties de données 256 et 257, reliées par deux canaux de transmission de données dédiés à la transmission de la même image de commande numérique à chacun des modules lumineux 210 et 220 respectivement. La même image numérique de commande comprenant les canaux d'images 1 et N est envoyée aux deux modules lumineux. Le module lumineux 210 comprend une unité de réception de données 216 telle qu'une interface de communication de données apte à lire les données séquentielles transmises par l'unité de commande, et d'en reconstruire l'information matricielle ou segmentée qui correspond uniquement au premier canal d'image de l'image numérique de commande. L'image résultante 1 est alors projetée par le module lumineux 210. Le module lumineux 220 comprend une unité de réception de données 227 apte à lire les données séquentielles transmises par l'unité de commande, et d'en reconstruire l'information matricielle qui correspond au canal d'image d'indice N de l'image numérique de commande. L'image résultante N est alors projetée par le module lumineux 220.

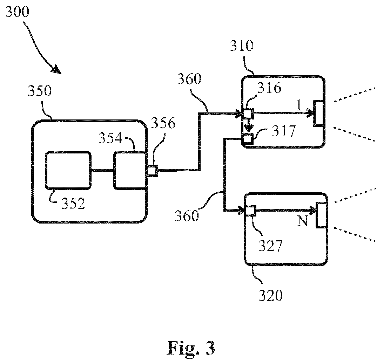

L'illustration de la figure 3 montre un autre mode de réalisation de l'ensemble d'éclairage 300 selon l'invention. Une unité de commande 350 comprend un processeur graphique 352 capable de générer une image numérique de commande 360, et une unité de transmission de données 354. Il s'agit par exemple d'une interface de communication de données configurée pour transmettre les données segmentées contenues dans les canaux de l'image numérique de commande 360 de manière séquentielle sur le canal de transmission de données qui relie l'unité de commande 350 au premier module lumineux 310. L'unité de transmission de données 354 comprend une sortie de données 356, reliée par un canal de transmission de données au premier module lumineux 310. L'image numérique de commande 360 comprenant les canaux d'images 1 et N est envoyée au premier module lumineux. Le premier module lumineux 310 comprend une unité de réception de données 316 telle qu'une interface de communication de données apte à lire les données séquentielles transmises par l'unité de commande, et configurée pour reconstruire l'information matricielle qui correspond au premier canal d'image de l'image numérique de commande. L'image résultante 1 est alors projetée par le module lumineux 310. Le premier module lumineux 310 comprend en outre une unité de transmission de données 317 apte à relayer ou répéter les données de l'image numérique de commande 360 à destination d'un deuxième module lumineux 320. Le deuxième module lumineux 320 comprend une unité de réception de données 327 apte à lire les données séquentielles transmises par le premier module 310, et d'en reconstruire l'information segmentée qui correspond au canal d'image d'indice N de l'image numérique de commande. L'image résultante N est alors projetée par le module lumineux 320. Ce montage en chaine peut évidemment être étendu à une pluralité plus importante de modules lumineux, sans pour autant sortir du cadre de la présente invention.

Dans tous les modes de réalisation de l'invention, une nouvelle image numérique de commande peut de manière alternative être envoyée à des instants prédéterminés. Par exemple, l'unité de commande 350 de la figure 3 peut être configurée à émettre un flux d'images numériques de commande à une fréquence de 60Hz. La résolution d'une image de commande est avantageusement identique à la résolution de projection que modules lumineux peuvent réaliser, de manière à ce qu'un segment d'un canal d'image de l'image numérique de commande corresponde à un segment projeté par un module lumineux. Au moins un des modules lumineux peut en outre être configuré pour former un faisceau lumineux qui est déterminé par une combinaison de plusieurs canaux d'images reçues avec l'image numérique de commande. Alternativement, si un module lumineux est capable d'émettre des faisceaux lumineux de couleurs différentes, le contour de chacun des faisceaux peut être déterminé par un des canaux de l'image numérique de commande, sans pour autant sortir du cadre de la présente invention.

L'étendue de la protection est déterminée par les revendications suivantes.

## Revendications

1. Ensemble d'éclairage (100, 200, 300) pour un véhicule automobile, l'ensemble comprenant une pluralité de modules lumineux (110,120; 210,220; 310,320), chaque module étant apte à émettre un faisceau lumineux segmenté, **caractérisé en ce que** l'ensemble comprend au moins une unité de commande (150, 250, 3540) commune à plusieurs modules lumineux, l'unité de commande étant adaptée à transmettre, moyennant un canal de communication, la même image numérique de commande (160, 260, 360) comprenant une pluralité de canaux d'image numérique à chacun desdits modules,
et **caractérisé en ce que** chaque module lumineux est adapté à projeter un faisceau lumineux segmenté déterminé par un sous-ensemble des canaux de l'image numérique de commande reçue.

2. Ensemble d'éclairage conforme à la première revendication, **caractérisé en ce que** l'ensemble comprend une unité de commande unique, commune à chacun des modules de la pluralité de modules lumineux.

3. Ensemble d'éclairage conforme à une des revendications 1 ou 2, **caractérisé en ce que** chaque module lumineux est adaptée à projeter un faisceau lumineux segmenté déterminé par un des canaux de l'image numérique de commande.

4. Ensemble d'éclairage conforme à une des revendications 1 à 3, caractérisé en que l'unité de commande comprend une pluralité de sorties de données, chacune des sorties de données étant configurée pour l'envoi de l'image numérique de commande à un des modules lumineux.

5. Ensemble d'éclairage conforme à une des revendications 1 à 3, **caractérisé en ce que** l'unité de commande comprend une sortie de données, configurée pour l'envoi de l'image numérique de commande à un premier des modules lumineux, ledit premier module étant configuré à répéter l'image numérique de commande reçue à au moins un autre module lumineux de l'ensemble.

6. Ensemble d'éclairage conforme à la revendication 5, **caractérisé en ce que** les modules lumineux sont reliés en chaine, de manière à ce que chaque module du montage, mis à part le premier, est configuré de manière à recevoir l'image numérique de commande de la part du module lumineux qui le précède dans la chaîne.

7. Ensemble d'éclairage conforme à une des revendications 1 à 6, **caractérisé en ce que** les modules lumineux sont capables de projeter un faisceau lumineux segmenté ayant une résolution d'au moins 800 segments.

8. Ensemble d'éclairage conforme à une des revendications 1 à 7, **caractérisé en ce que** l'unité de commande est configurée à émettre une séquence d'images numériques de commande à destination des modules lumineux.

9. Ensemble d'éclairage conforme à une des revendications 1 à 8, **caractérisé en ce que** l'image numérique de commande comprend trois canaux d'image, notamment rouge, vert et bleu, et **en ce que** l'ensemble comprend trois modules lumineux, dont chacun est configuré de manière à projeter un faisceau segmenté conforme respectivement à l'un desdits trois canaux.

10. Ensemble d'éclairage conforme à une des revendications 1 à 9, **caractérisé en ce que** chaque module lumineux comprend un dispositif de micro-miroirs, DMD, ou une source matricielle monolithique à éléments semi-conducteurs électroluminescents, ou un écran à cristaux liquides, ou un dispositif de projection à balayage Laser.

11. Procédé de commande d'une pluralité de modules lumineux dans un ensemble d'éclairage pour un véhicule automobile, chaque module lumineux étant apte à émettre un faisceau lumineux segmenté, **caractérisé en ce que** le procédé comprend les étapes suivantes :
i) au niveau d'un module de commande, générer une image numérique de commande comprenant une pluralité de canaux d'image numérique, les informations contenues dans chaque canal d'image définissant les contours d'un faisceau lumineux segmenté à être émis par un des modules lumineux ;
ii) transmission, moyennant un canal de communication, de l'image numérique de commande à chacun desdits modules lumineux.

12. Procédé selon la revendication 11, **caractérisé en ce qu'**il comprend l'étape suivante :
iii) au niveau de chacun des modules lumineux, projeter un faisceau lumineux segmenté déterminé par un sous-ensemble des canaux de l'image numérique de commande reçue.
